# EUROPEAN PATENT APPLICATION

(11) **EP 4 092 066 A1**
(43) Date of publication of application: **23.11.2022**
(21) Application number: 20913497.2
(22) Date of filing: 17.12.2020
(51) Int. Cl.: C08G 63/02, C08G 63/66

(54) **BUTENEDIOL-BASED POLYESTER ELASTOMER AND PREPARATION METHOD**

(30) Priority: 16.01.2020 CN 202010045414
(71) Applicant: Beijing University Of Chemical Technology, Beijing 100029 (CN); Red Avenue New Materials Group Co., Ltd, Shanghai 200122 (CN)
(72) Inventor: WANG, Zhao, Beijing 100029 (CN); ZHANG, Qinan, Beijing 100029 (CN); ZHANG, Liqun, Beijing 100029 (CN); WANG, Wencai, Beijing 100029 (CN); ZHANG, Ning, Shanghai 200122 (CN); ZHAO, Yanchao, Shanghai 200122 (CN)
(74) Representative: Grünecker Patent- und Rechtsanwälte PartG mbB
(86) International application number: PCT/CN2020/137013
(87) International publication number: WO 2021/143435

(57) **Abstract**

The present invention discloses a butenediol-based polyester elastomer and a method for preparing same. The butenediol-based polyester elastomer has a structure as shown below: 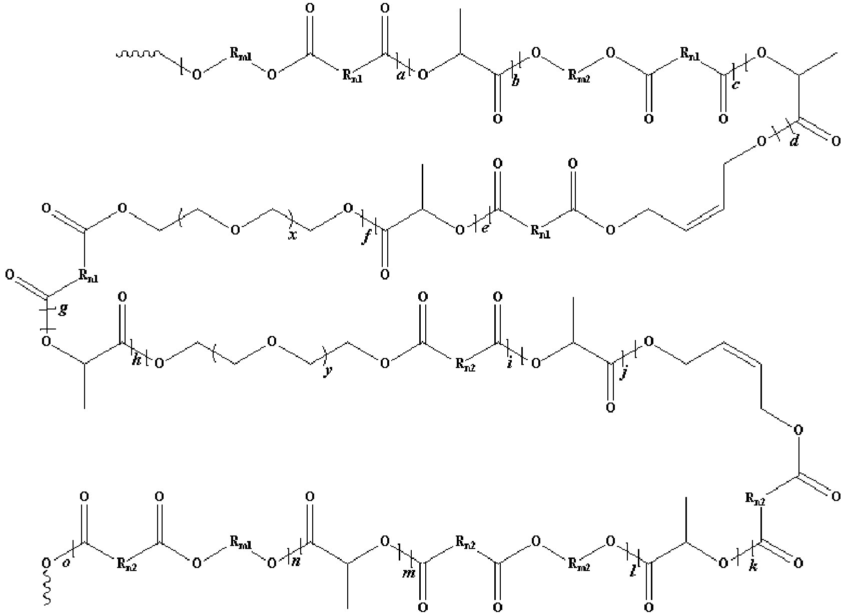 In the present invention, 1,4-butenediol containing high-stability double-bond is used to replace itaconic acid, and a series of butenediol-based polyester elastomers with high molecular weight and narrow distribution are synthesized, which have high relative molecular weight and narrow relative molecular weight distribution. The crosslinking in subsequent processing is more controllable, and the dosage of a vulcanizing agent is equivalent to that of traditional rubber.

## Description

### Technical Field

The present invention relates to the technical field of high molecular materials, and more particularly to a butenediol-based polyester elastomer and a method for preparing same.

### Background Art

As a class of degradable polymers, polyesters received extensive research and attention in the field of high molecular materials. At present, the annual output of the polyester industry has reached 10 million tons, but its application is still mainly limited to plastics, fibers and others. Polyester is rarely involved in the field of rubber. In view of this, since the concept of "bio-based engineering elastomer" was put forward in 2008, Beijing University of Chemical Technology has proposed and prepared a variety of bio-based polyester elastomer materials for the first time, thus broadening the application of polyesters.

The design strategy of polyester elastomers is to destroy a crystallization behavior of a polyester molecular chain through multi-component copolymerization, and at the same time, introduce monomers containing carbon-carbon double-bonds to provide reaction sites for later crosslinking of polyester elastomers. However, in a polyester elastomer product that has been developed so far, monomers that provide double-bonds are still limited to dibasic acid, especially itaconic acid. For example, in polyester bioengineering rubber and a method for the same disclosed in patent CN101450985B, a double-bond donor used for later chemical crosslinking is itaconic acid. However, the double-bond in the itaconic acid has extremely high activity, so that there is a risk of easy gelation at a polycondensation stage, and the apparent molecular weight distribution of a sample is wide. In addition, when peroxide is used for crosslinking, the crosslinking speed is too high, and the dosage of a crosslinking agent is too small, so that the controllability of crosslinking degree is poor.

Therefore, there is a need to develop a new polyester elastomer.

### Summary of the Invention

In order to solve the problems in the prior art, the present invention provides a butenediol-based polyester elastomer and a method for preparing same. In the present invention, 1,4-butenediol containing high-stability double-bond is selected to replace itaconic acid, and a series of butenediol-based polyester elastomers with high molecular weight and narrow distribution are synthesized, which have high relative molecular mass and narrow relative molecular mass distribution. The 1,4-butenediol is highly stable in the high-temperature polycondensation process, so that it is not easy to undergo side reactions like the itaconic acid (side reactions can easily lead to broadening of the molecular weight distribution of a product); the crosslinking is controllable in the subsequent processing process; and the dosage of a vulcanizing agent is equivalent to that of traditional rubber.

A first purpose of the present invention is to provide a butenediol-based polyester elastomer.

The butenediol-based polyester elastomer has a structure as shown below: 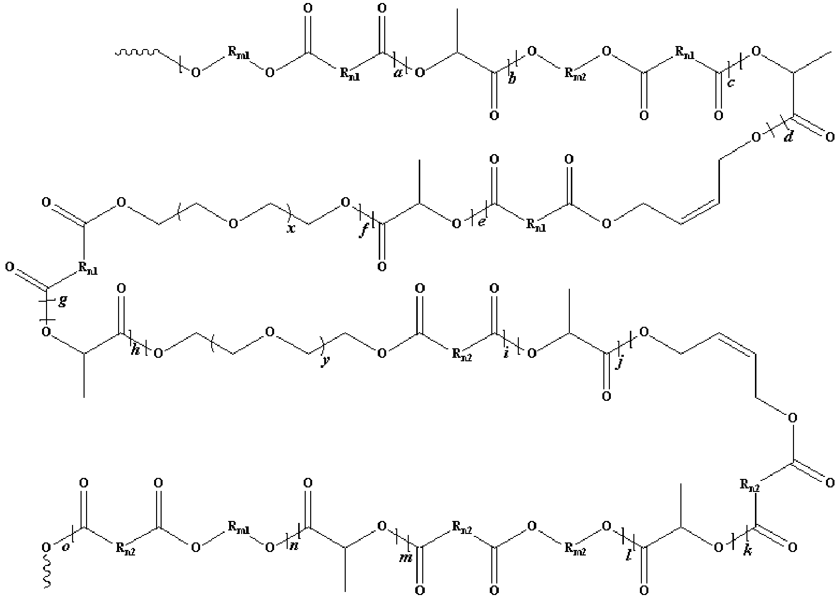
Rₘ₁ and Rₘ₂ are branched or unbranched chain alkyl groups, and Rₘ₁ and Rₘ₂ may be the same or different, wherein m1 and m2 represent the number of carbon atoms, 2≥m1≥14, preferably 2≥m1≥10; 2≥m2≥14, preferably 2≥m2≥10; m1 and m2 may be the same or different;
Rₙ₁ and Rₙ₂ are branched or unbranched chain alkyl groups, and Rₙ₁ and Rₙ₂ may be the same or different, wherein n1 and n2 represent the number of carbon atoms, 2≥n1≥12, preferably 2≥n1≥8; 2≥n2≥12, preferably 2≥n2≥8; n1 and n2 may be the same or different;
x and y are integers from 1 to 3; and x and y may be equal or unequal.
a, b, c, d, e, f, g, h, i, j, k, l, m, n and o represent a polymerization degree;
wherein a, c, m and o are not 0 at the same time, and e and k are not 0 at the same time; and other variables can be 0 at the same time.

A second purpose of the present invention is to provide a method for preparing the butenediol-based polyester elastomer.

The method includes:
under the action of a catalyst, carrying out esterification reaction and polymerization reaction on dihydric alcohol, binary acid and/or lactic acid, an antioxidant and a polymerization inhibitor to prepare a butenediol-based polyester elastomer;
the dihydric alcohol is 1,4-butenediol and other diols; other diols is one or a combination of HO-Rₘ-OH, diglycol, triethylene glycol and tetraethylene glycol;
wherein Rₘ is a branched or unbranched chain alkyl group, wherein m represents the number of carbon atoms, 2≥m≥14; preferably 2≥m≥10;
the binary acid is one or a combination of HOOC-Rₙ-COOH;
wherein Rₙ is a branched or unbranched chain alkyl group, wherein n represents the number of carbon atoms, 2≥n≥12; preferably 2≥n≥8.

Preferably:
the mole percentage of the 1,4-butenediol in the diol is 2% to 60%, and more preferably 5% to 30%.

The catalyst can use a conventional catalyst in the prior art. In the present invention, one or a combination of selenium dioxide, antimony trioxide, ethylene glycol antimony, p-toluenesulfonic acid, acetate, alkyl aluminum having 1 to 12 carbon atoms, an organic tin compound and titanate can be preferred. In view of the problem of heavy metal residues in a polyester product, a titanate catalyst without heavy metal elements is preferred, such as tetrabutyl titanate and titanate Tetraisopropyl ester. The catalyst can be added in an esterification section or a pre-polycondensation section. The dosage of the catalyst is 0.02-0.5% of the total mass of the diol, the binary acid and/or the lactic acid.

The antioxidant can use a conventional antioxidant in the prior art. In the present invention, the antioxidant may be preferably a phosphoric acid or phosphorous acid compound can be preferred, which is preferably one or two of phosphoric acid, phosphorous acid, phosphate, phosphite ester,phenyl phosphate and phenyl phosphite. The dosage of the antioxidant is 0.01-0.2% of the total mass of the diol, the binary acid and/or the lactic acid, preferably 0.04-0.08%.

The polymerization inhibitor can use a conventional polymerization inhibitor in the prior art. In the present invention, the polymerization inhibitor can be preferably a phenolic polymerization inhibitor, an ether polymerization inhibitor, a quinone polymerization inhibitor or an aromatic amine polymerization inhibitor, which is preferably one or two of benzenediol, p-tert-butylcatechol, p-hydroxyanisole, benzoquinone, diphenylamine and p-phenylenediamine. The dosage of the polymerization inhibitor is 0.01-0.5% of the total mass of the diol, the binary acid and/or the lactic acid, preferably 0.05-0.2%.
a molar ratio of alcohol to acid of the diol, the binary acid and/or the lactic acid is 1.05:1-1.8:1, preferably 1.1-1.5:1, wherein the molar ratio of alcohol to acid refers to a molar ratio of the number of functional groups -OH to the number of functional groups -COOH.

The esterification reaction is preferably as follows:
the esterification reaction is carried out by raising a temperature to 130-240°C under protective gas, and the esterification reaction lasts for 1-5 h. The protective gas is gas that does not affect the reaction progress and may not react with raw materials. The protective gas is preferably inert gas or nitrogen.

The polymerization reaction is preferably as follows:
the polymerization reaction is carried out by performing pre-polycondensation at 190-250°C and 3 kPa-10 kPa for 1-4 h; carrying out vacuuming at 200-250°C to 500 Pa or below; and carrying out final polycondensation for 0.5-10 h.

The present invention may specifically use the following technical solution:
A method for preparing a butenediol-based polyester elastomer includes the following steps:
under the protection of protective gas, adding diol (at least including 1,4-butenediol), binary acid and/or lactic acid into a reaction container according to an alcohol-to-acid ratio of 1.05:1-1.8:1, and adding an antioxidant which is 0.01-0.2% of the total mass of a monomer and a polymerization inhibitor that is 0.01-0.5% of the total mass of the monomer at the same time; then under the protective gas atmosphere, raising a temperature to 130-240°C for esterification for 1-5 h; later, under the action of a catalyst, carrying out pre-polycondensation at 190-250°C and 3 kPa-10 kPa for 1-4 h; carrying out vacuuming at 200-250°C to 500 Pa or below; and carrying out final polycondensation for 0.5-10 h to obtain a butenediol-based polyester elastomer.

In the present invention, a direct esterification path is adopted, so that the flow is simple, the implementation is easy, and the operability is high.

In the present invention, the butenediol-based polyester elastomer can be vulcanized by using a peroxide crosslinking agent commonly used in the rubber industry, preferably the most commonly used dicumyl peroxide.

In the present invention, the double-bond in the butenediol-based polyester elastomer has high stability, when the peroxide crosslinking agent is used for vulcanization, the dosage of the crosslinking agent is 0.2-3%, preferably 0.5-2%, of the total mass of the polyester elastomer.

In the present invention, due to a high molecular weight of the butenediol-based polyester elastomer and a similar crosslinking mechanism to that of traditional rubber, it can be reinforced by carbon black and/or white carbon black and vulcanized by a peroxide crosslinking agent, thus preparing a polyester elastomer/white carbon black (and/or carbon black) rubber composite material with high performance. The butenediol-based polyester elastomer has the potential to be used in the fields of low-temperature- and oil-resistant rubber, degradable tires and the like.

Compared with the prior art, the present invention has the following advantages:
I. In the present invention, 1,4-butenediol is introduced into a polyester elastomer for the first time, and a brand-new polyester elastomer product is developed.
II. In the present invention, the double-bond in the butenediol is highly stable in the polymerization process and is not easy to undergo side reactions, so that a polyester elastomer product with a high molecular weight and narrow distribution can be obtained.
III. In the present invention, the method for preparing the butanediol-based polyester elastomer product is simple, feasible and easy to implement, and there are a variety of products prepared from optional monomers in a large scale, which is expected to achieve large-scale preparation and has a wide application prospect.

### Brief Description of the Drawings

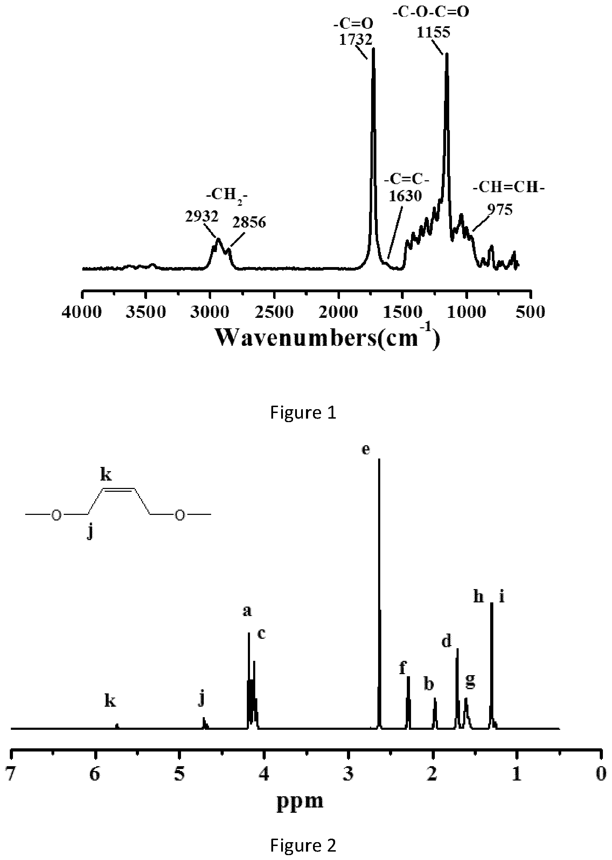

Fig. 1 is an FTIR spectrogram of a prepared butenediol-based polyester elastomer in Embodiment 1;
Fig. 2 is an H-NMR spectrogram of the prepared butenediol-based polyester elastomer in

### Embodiment 1; and

Fig. 3 is a DSC secondary heating curve of the prepared butenediol-based polyester elastomer in Embodiment 1.

The FTIR spectrogram and the H-NMR spectrogram verify the structure of the obtained butenediol-based polyester. In the FTIR spectrogram, the presence of peaks -C=O and -C-O-C=O proves that a large number of ester groups are contained, and peak -CH2- corresponds to a large number of aliphatic chains; and the presence of peaks -C=C- and -CH=CH- proves the successful introduction of butenediol, that is, the obtained material is a butenediol-based polyester. In the H-NMR spectrum, peaks k and j correspond to two hydrogen atoms in a butenediol structure, which can prove the successful introduction of butenediol, and this peak position can be analogized to all the embodiments. As far as Embodiment 1 is concerned: peaks a and b correspond to two kinds of hydrogens in 1, 3-propanediol; peaks c and d correspond to two kinds of hydrogens in 1,4-butanediol; e corresponds to one kind of hydrogen of succinic acid; f, g, h and i correspond to four kinds of hydrogens in sebacic acid; and therefore, it can be proved that the structure of the obtained butenediol-based polyester is consistent with an expected structure.

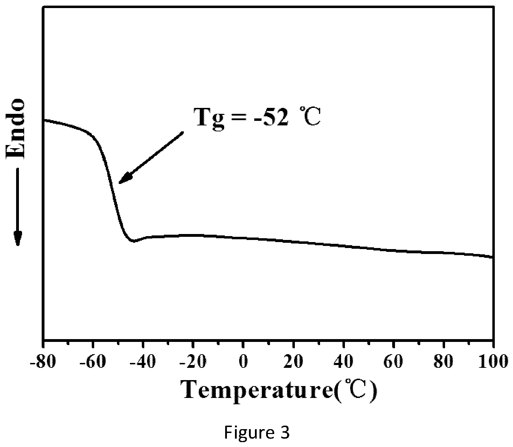

The DSC curve proves that the obtained butenediol-based polyester is an elastomer. It can be seen from Fig. 3 that there is only one glass transition in the curve, and there is no crystallization and melting behaviors. Therefore, it can be proved that the butenediol-based polyester obtained in Embodiment 1 has an amorphous structure, which is a new polyester elastomer with a glass transition temperature (Tg) of -51°C.

### Detailed Description of the Invention

The present invention will be specifically described below in conjunction with the accompanying drawings and specific embodiments. It is necessary to point out that the following embodiments are only used to further illustrate the present invention, and should not be construed as limiting the protection scope of the present invention. Some non-essential improvements and adjustments made by those skilled in the art according to the Summary to the present invention still fall within the protection scope of the present invention.

Raw materials used in the embodiments are all commercially available.

Gel permeation chromatography (GPC) test (conventional, common in the prior art): Polystyrene was used as a standard substance, and tetrahydrofuran was used as a mobile phase, so as to measure a relative molecular mass and distribution of an obtained polyester elastomer. Experimental test results were shown in Table 1.

Differential scanning calorimetry (DSC) test (conventional, common in the prior art): Under a nitrogen atmosphere, a sample was heated from 25°C to 200°C at a rate of 10°C/min for 5 min; then the sample was cooled from 200°C to -100°C at the rate of 10°C/min for 10 min; and the sample was then heated from -100°C to 200°C at the rate of 10°C/min. Values of Tg and Tm of an obtained polyester elastomer were read, and experimental test results were shown in Table 1.

### Embodiment 1

565 g of (7.43 mol) 1,3-propanediol, 669 g of (7.43 mol) 1,4-butanediol, 145 g of (1.65 mol) 1,4-butenediol, 1050 g of (8.89 mol) succinic acid, 770 g of (3.81 mol) sebacic acid, 0.32 g of phosphorous acid and 1.28 g of hydroquinone were added into a reaction kettle with mechanical stirring, a heating device, a temperature measurement device, a nitrogen system and a vacuum system; under a nitrogen atmosphere, the temperature was raised to 180°C for normal pressure esterification for 2 h; tetrabutyl titanate that was 0.1% of the total mass of a monomer was added and used as a catalyst; the temperature was raised to 220°C for pre-polycondensation at 3 kPa for 1 h; and finally at 220°C, vacuumizing was carried out to be 500 Pa or below, and final polycondensation was carried out for 9 h to obtain a butenediol-based polyester elastomer.

The structure of the prepared butenediol-based polyester elastomer is as follows: 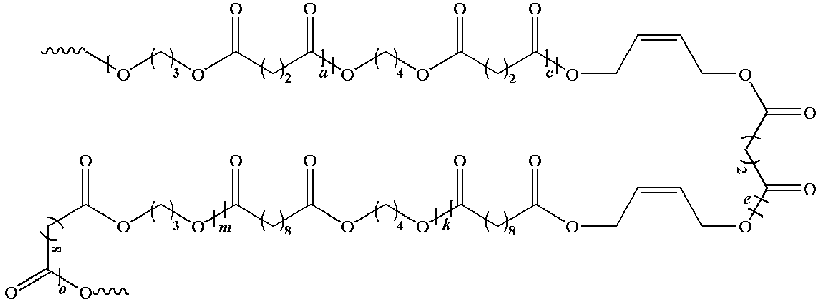 where ml=3, m2=4; n1=2, n2=8;
in addition, (*a*+*c*+*e*): (*k*+*m*+*o*)≈ 9.52: 4.08.

### Embodiment 2

598 g of (6.63 mol) 1,4-butanediol, 212 g of (2.41 mol) 1,4-butenediol, 931 g of (10.33 mol) lactic acid, 153 g of (1.29 mol) succinic acid, 1,306 g of (6.46 mol) sebacic acid, 3.2 g of tri-(2,4-di-tert-butylphenyl)-phosphite ester and 12.8 g of p-hydroxyanisole were added into a reaction kettle with mechanical stirring, a heating device, a temperature measurement device, a nitrogen system and a vacuum system; under a nitrogen atmosphere, the temperature was raised to 130°C for normal pressure esterification for 2 h; the temperature was then raised to 190°C for continuous normal pressure esterification for 2 h; tetraisopropyl titanate that was 0.05% of the total mass of a monomer was added and used as a catalyst; the temperature was raised to 190°C for pre-polycondensation at 10 kPa for 4 h; and finally at 210°C, vacuumizing was carried out to be 500 Pa or below, and final polycondensation was carried out for 6 h to obtain a butenediol-based polyester elastomer.

The structure of the prepared butenediol-based polyester elastomer is as follows: 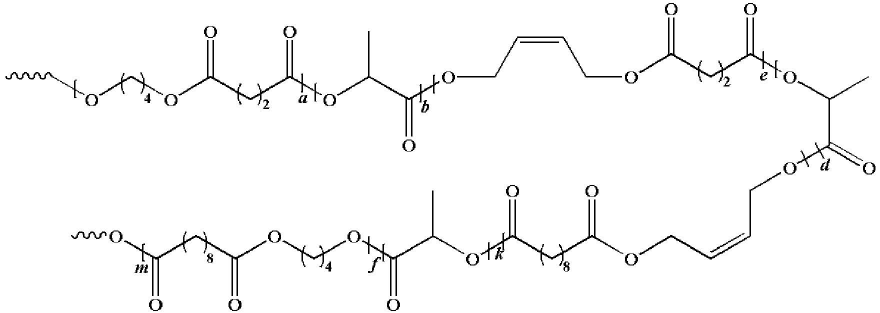 where m1=4, m2=0 (equivalent to m1=m2=4); n1=2, n2=8;
in addition, (*b*+*d*+*ƒ*): (*a*+*e*): (*k*+*m*)≈ 10.33: 1.29: 6.46.

### Embodiment 3

709 g of (7.86 mol) 1,4-butanediol, 277 g of (3.15 mol) 1,4-butenediol, 501 g of (4.72 mol) diglycol, 851 g of (7.21 mol) succinic acid, 862 g of (5.90 mol) adipic acid, 1.6 g of triphenyl phosphite and 8 g of hydroquinone were added into a reaction kettle with mechanical stirring, a heating device, a temperature measurement device, a nitrogen system and a vacuum system; under a nitrogen atmosphere, the temperature was raised to 185°C for normal pressure esterification for 3 h; p-toluenesulfonic acid that was 0.40% of the total mass of a monomer was added and used as a catalyst; the temperature was raised to 210°C for pre-polycondensation at 5 kPa for 2 h; and finally at 230°C, vacuumizing was carried out to be 500 Pa or below, and final polycondensation was carried out for 7 h to obtain a butenediol-based polyester elastomer.

The structure of the prepared butenediol-based polyester elastomer is as follows: 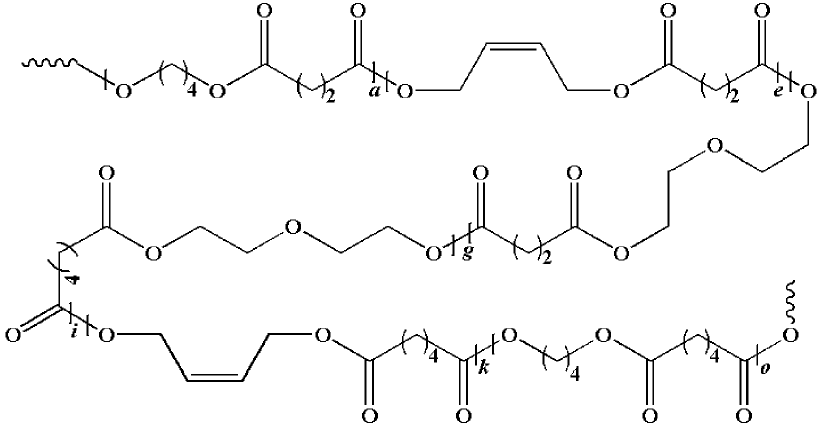 where m1=4, m2=0 (equivalent to m1=m2=4); n1=2, n2=1; x=y=1;
in addition, (a+e+g): (i+k+o)≈ 7.21: 5.90.

### Embodiment 4

687 g of (11.07 mol) ethanediol, 321 g of (1.84 mol) decamethylene glycol, 488 g of (5.53 mol) 1,4-butenediol, 934 g of (7.91 mol) succinic acid, 770 g of (5.27 mol) adipic acid, 2.56 g of trimethyl phosphate and 6.4 g of benzoquinone were added into a reaction kettle with mechanical stirring, a heating device, a temperature measurement device, a nitrogen system and a vacuum system; under a nitrogen atmosphere, the temperature was raised to 180°C for normal pressure esterification for 3 h; tetrabutyl titanate that was 0.20% of the total mass of a monomer was added and used as a catalyst; the temperature was raised to 200°C for pre-polycondensation at 5 kPa for 2 h; and finally at 225°C, vacuumizing was carried out to be 500 Pa or below, and final polycondensation was carried out for 4 h to obtain a butenediol-based polyester elastomer.

The structure of the prepared butenediol-based polyester elastomer is as follows: 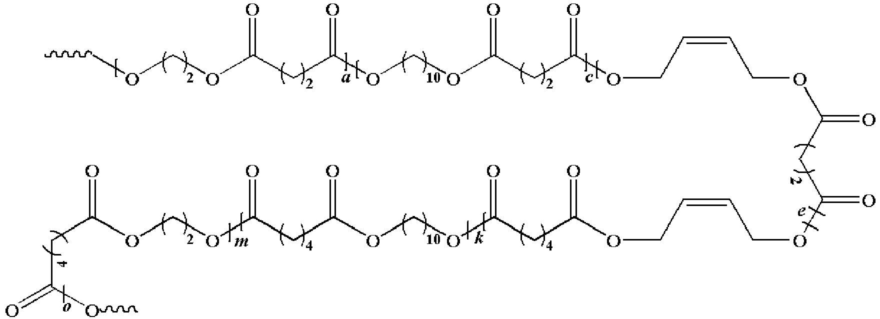 where m1=2, m2=10; n1=2, n2=4;
in addition, (*a*+*c*+*e*): (*k*+*m*+*o*)≈7.91: 5.27.

### Embodiment 5

550 g of (7.22 mol) 1,3-propanediol, 163 g of (1.81 mol) 2,3-butanediol, 796 g of (9.03 mol) 1,4-butenediol, 1,137 g of (9.63 mol) succinic acid, 555 g of (2.41 mol) dodecanedioic acid, 4.8 g of phosphorous acid and 16 g of p-hydroxyanisole were added into a reaction kettle with mechanical stirring, a heating device, a temperature measurement device, a nitrogen system and a vacuum system; under a nitrogen atmosphere, the temperature was raised to 160°C for normal pressure esterification for 1 h; the temperature was then raised to 180°C for continuous esterification for 3 h; ethylene glycol antimony that was 0.50% of the total mass of a monomer was added and used as a catalyst; the temperature was raised to 200°C for pre-polycondensation at 10 kPa for 2 h; and finally at 230°C, vacuumizing was carried out to be 500 Pa or below, and final polycondensation was carried out for 3 h to obtain a butenediol-based polyester elastomer.

The structure of the prepared butenediol-based polyester elastomer is as follows: 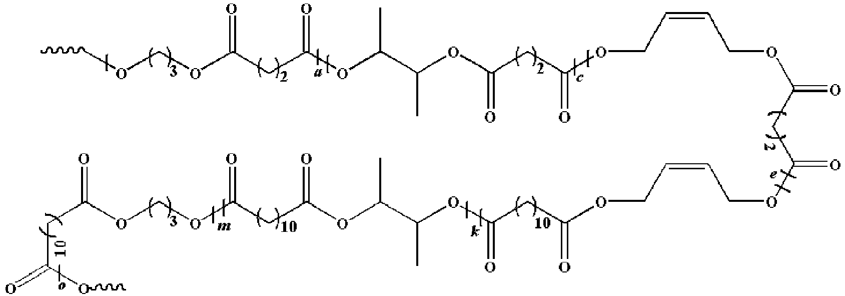 where m1=3, m2=4 (branched chain alkyl with 4 carbon atoms); n1=2, n2=10;
in addition, (*a*+*c*+*e*): (*k*+*m*+*o*)≈ 9.63: 2.41.

### Embodiment 6

543 g of (6.02 mol) 1,4-butanediol, 1,086 g of (12.05 mol) 2,3-butanediol, 177 g of (2.01 mol) 1,4-butenediol, 1,395 g of (11.81 mol) succinic acid, 3.2 g of trimethyl phosphate and 12.8 g of p-hydroxyanisole were added into a reaction kettle with mechanical stirring, a heating device, a temperature measurement device, a nitrogen system and a vacuum system; under a nitrogen atmosphere, the temperature was raised to 170°C for normal pressure esterification for 2 h; the temperature was then raised to 210°C for esterification for 1 h; the temperature was then raised to 240°C for continuous esterification for 0.5 h; ethylene glycol antimony that was 0.25% of the total mass of a monomer was added and used as a catalyst; the temperature was raised to 250°C for pre-polycondensation at 10 kPa for 1 h; and finally at 250°C, vacuumizing was carried out to be 500 Pa or below, and final polycondensation was carried out for 0.5 h to obtain a butenediol-based polyester elastomer.

The structure of the prepared butenediol-based polyester elastomer is as follows: 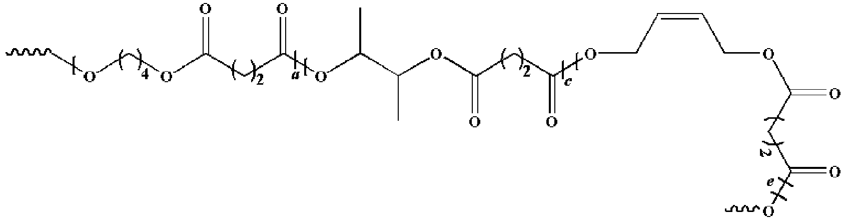 where m1=4, m2=4 (branched chain alkyl with 4 carbon atoms); n1=2, n2=0 (equivalent to n1=n2=2);
in addition, *a*: *c*: *e≈* 6.02: 12.05: 2.01.

### Comparative example 1

633 g of (8.32 mol) 1,3-propanediol, 750 g of (8.32 mol) 1,4-butanediol, 952 g of (8.06 mol) succinic acid, 699 g of (3.46 mol) sebacic acid, 166 g of (1.28 mol) itaconic acid, 0.32 g of phosphorous acid and 1.28 g of hydroquinone were added into a reaction kettle with mechanical stirring, a heating device, a temperature measurement device, a nitrogen system and a vacuum system; under a nitrogen atmosphere, the temperature was raised to 180°C for normal pressure esterification for 2 h; tetrabutyl titanate that was 0.1% of the total mass of a monomer was added and used as a catalyst; the temperature was raised to 220°C for pre-polycondensation at 3 kPa for 1 h; and finally at 220°C, vacuumizing was carried out to be 500 Pa or below, and final polycondensation was carried out for 6 h to obtain an itaconic acid-based polyester elastomer.

The structure of the prepared itaconic acid-based polyester elastomer is as follows: 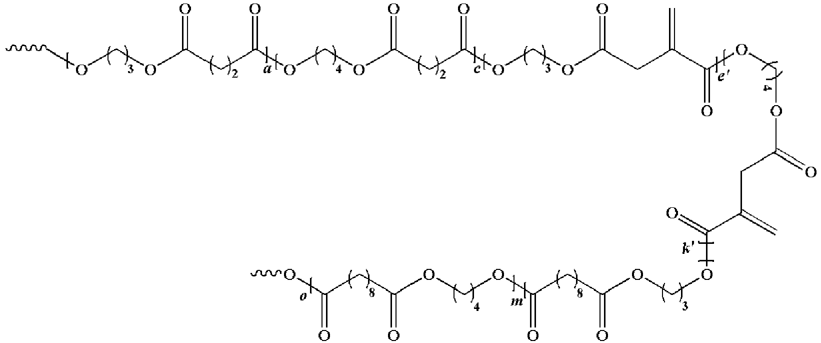 where m1=3, m2=4; n1=2, n2=8;
in addition, (*a*+*c*): (*m*+*o*): (e'+k') ≈ 8.06: 3.46: 1.28.

**Table 1 Test results of polyester elastomers in the embodiments and the comparative example in the present invention**

| | Alcohol-to-acid ratio *^{a}* | BeDO%mol *^{b}* | Tg (°C) | Tc, Tm | Mn | PDI |
|---|---|---|---|---|---|---|
| Comparative example 1 | 1.3: 1 | 10%mol IA *^{d}* | -51 | None | 37, 200 | 3.77 |
| Embodiment 1 | 1.3: 1 | 10% | -52 | None *^{c}* | 76, 800 | 1.99 |
| Embodiment 2 | 1.1: 1 | 27% | -45 | None | 65,300 | 2.21 |
| Embodiment 3 | 1.2: 1 | 20% | -47 | None | 70, 300 | 2.15 |
| Embodiment 4 | 1.4: 1 | 30% | -44 | None | 67, 700 | 2.25 |
| Embodiment 5 | 1.5: 1 | 50% | -50 | None | 45, 000 | 3.33 |
| Embodiment 6 | 1.7: 1 | 10% | -17 | None | 39, 000 | 2.17 |

| | | | | | | |
|---|---|---|---|---|---|---|
| *a:* the alcohol-to-acid ratio of the present invention, that is, during feeding, a molar ratio of -OH to -COOH in the monomer. For a lactic acid-containing system, during calculation of the molar ratio, -OH and -COOH contained in lactic acid also need to be counted. b: BeDO%mol refers to the mole percentage of 1,4-butenediol in diol. The diol is conventionally defined, including saturated diol, glycol and 1,4-butenediol. *c:* In the secondary heating curve, zero Tc and Tm can prove that the obtained polyester material has only one glass transition temperature less than room temperature, without crystallization and melting, so the obtained polyester material is an elastomer material. d: "10% mol IA" means that the mole fraction of itaconic acid in the total amount of binary acid is 10%. Since each mole of itaconic acid and each mole of butenediol both contain 1 mole of double-bonds, the number of double-bonds contained in the system of "10%mol IA" is theoretically equivalent to that of "10%mol BeDO". | | | | | | |

It can be seen from the data in Table 1 that the butenediol-based polyester elastomer prepared in the present invention generally has higher relative molecular mass and narrower relative molecular mass distribution than the itaconic acid-based polyester elastomer. When the dosage of the butenediol is low, the relative molecular mass distribution is around 2.0, which is close to that of saturated polyester plastic, such as PBS and PBA, which can prove that the butenediol has extremely high stability. When the dosage of the butenediol increases, the relative molecular mass distribution gradually broadens, but the butenediol system still has the advantages of "high molecular weight and narrow distribution" compared with the itaconic acid system. The main reason is that compared with the double-bond in the itaconic acid, the double-bond in the butenediol is more stable, so in high-temperature melting and polycondensation processes, side reactions are not easy to occur, thereby ensuring a narrower relative molecular mass distribution.

## Claims

1. A butenediol-based polyester elastomer, **characterized in that** the butenediol-based polyester elastomer has a structure as shown below: 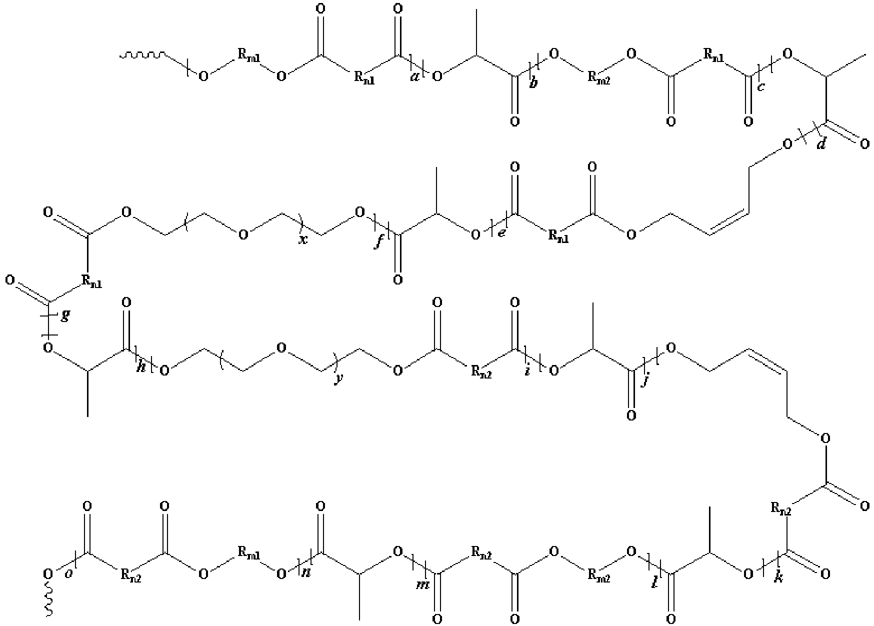
Rₘ₁ and Rₘ₂ are branched or unbranched chain alkyl groups, and Rₘ₁ and Rₘ₂ may be the same or different, wherein m1 and m2 represent the number of carbon atoms, 2≥m1≥14, preferably 2≥m1≥10; 2>m2>14 preferably 2>m2>10; m1 and m2 may be the same or different;
Rₙ₁ and Rₙ₂ are branched or unbranched chain alkyl groups, and Rₙ₁ and Rₙ₂ may be the same or different, wherein n1 and n2 represent the number of carbon atoms, 2≥n1≥12, preferably 2≥n1≥8; 2>n2>12m preferably 2≥n2≥8; n1 and n2 may be the same or different;
wherein a, c, m and o are not 0 at the same time, and e and k are not 0 at the same time;
x and y are integers from 1 to 3; and x and y may be equal or unequal.

2. A method for preparing the butenediol-based polyester elastomer according to claim 1, **characterized in that** the method comprises:
under the action of a catalyst, carrying out esterification reaction and polymerization reaction on dihydric alcohol, binary acid and/or lactic acid, an antioxidant and a polymerization inhibitor to prepare a butenediol-based polyester elastomer;
the dihydric alcohol is 1,4-butenediol and other diols; other diols is one or a combination of HO-Rₘ-OH, diglycol, triethylene glycol and tetraethylene glycol;
wherein Rₘ is a branched or unbranched chain alkyl group, and m represents the number of carbon atoms, 2≥m≥14; preferably 2≥m≥10;
the binary acid is one or a combination of HOOC-Rₙ-COOH;
wherein Rₙ is a branched or unbranched chain alkyl group, and n represents the number of carbon atoms, 2>n>12; preferably 2≥n≥8.

3. The method for preparing the butenediol-based polyester elastomer according to claim 2, **characterized in that**
the mole percentage of the 1,4-butenediol in the diol is 2% to 60%.

4. The method for preparing the butenediol-based polyester elastomer according to claim 3, **characterized in that**
the mole percentage of the 1,4-butenediol in the diol is 5% to 30%.

5. The method for preparing the butenediol-based polyester elastomer according to claim 2, **characterized in that**
the catalyst is one or a combination of selenium dioxide, antimony trioxide, ethylene glycol antimony, p-toluenesulfonic acid, acetate, alkyl aluminum having 1 to 12 carbon atoms, an organic tin compound and titanate;
the antioxidant is one or a combination of phosphoric acid or a phosphorous acid compound;
the polymerization inhibitor is one or a combination of a phenol polymerization inhibitor, an ether polymerization inhibitor, a quinone polymerization inhibitor or an aromatic amine polymerization inhibitor.

6. The method for preparing the butenediol-based polyester elastomer according to claim 2, **characterized in that**
a molar ratio of the number of functional groups -OH to the number of functional groups -COOH in the diol, binary acid and/or lactic acid is 1.05:1-1.8:1;
the dosage of the antioxidant is 0.01-0.2% of the total mass of the diol, the binary acid and/or the lactic acid; and
the dosage of the polymerization inhibitor is 0.01-0.5% of the total mass of the diol, the binary acid and/or the lactic acid.

7. The method for preparing the butenediol-based polyester elastomer according to claim 6, **characterized in that**
the molar ratio of the number of functional groups -OH to the number of functional groups -COOH in the diol, binary acid and/or lactic acid is 1.1-1.5:1;
the dosage of the antioxidant is 0.04-0.08% of the total mass of the diol, the binary acid and/or the lactic acid; and
the dosage of the polymerization inhibitor is 0.05-0.2% of the total mass of the diol, the binary acid and/or the lactic acid.

8. The method for preparing the butenediol-based polyester elastomer according to claim 2, **characterized in that**
the dosage of the catalyst is 0.02-0.5% of the total mass of the diol, the binary acid and/or the lactic acid.

9. The method for preparing the butenediol-based polyester elastomer according to claim 2, **characterized in that**
the esterification reaction is carried out by raising a temperature to 130-240°C under protective gas, and the esterification reaction lasts for 1-5 h.

10. The method for preparing the butenediol-based polyester elastomer according to claim 2, **characterized in that**
the polymerization reaction is carried out by performing pre-polycondensation at 190-250°C and 3 kPa-10 kPa for 1-4 h; carrying out vacuuming at 200-25 0°C to 500 Pa or below; and carrying out final polycondensation for 0.5-10 h.
